# EUROPEAN PATENT APPLICATION

(11) **EP 1 985 410 A1**
(43) Date of publication of application: **29.10.2008**
(21) Application number: 07425250.3
(22) Date of filing: 27.04.2007
(51) Int. Cl.: B23Q 3/157, B23Q 39/04

(54) **Rotary transfer machine-tool with automatic tool change**

(71) Applicant: IEMCA Giuliani Macchine Italia S.p.A., 48018 Faenza (Ravenna) (IT)
(72) Inventor: Landi, Enrico, 40122 Bologna (IT); Cusumano, Dario, 48018 Faenza (Ravenna) (IT)
(74) Representative: Lanzoni, Luciano

(57) **Abstract**

The transfer type machine tool comprises; a bed (2); a rotary table (3) with vertical axis (5), for supporting the workpieces; a station (9) for loading and/or unloading the workpieces; a plurality of work stations (10, 13) equipped with machining units (11, 12), both horizontal and vertical, and respective automatic tool changing devices (17).

## Description

This invention relates to a machine tool of the transfer type.

More specifically, the invention relates to a machine tool of the transfer type with a rotary table to which workpieces to be subjected to different machining processes are fixed by suitable clamping means and which transfers the workpieces from one to another of a plurality of work stations where they are machined in succession by different machining units.

As is known, machine tools of this type have a bed on which the machining units, arranged in such a way as to surround the rotary table, are mounted, and the number of clamping elements is usually at least equal to the number of work stations so that a plurality of workpieces can be machined simultaneously.

The first work station is a loading station where the workpieces is fixed to one of the clamping elements. The rotary table moves the workpiece through the stations following the first, each of which is designed to perform a specific machining operation. Lastly, the finished workpiece is released at an unloading station. The loading and unloading stations are advantageously one and the same.

Each of the different machining units located at the work stations is designed to perform a specific machining operation on the workpiece.

Several different machine architectures have been developed to meet a wide variety of mechanical processing requirements. Despite this, machine tools available today are not free of disadvantages.

More and more often, highly specific machining operations are required, even for small to medium product batches.

For a manufacturing company, the possibility of adapting machines to different production processes quickly and even for short periods constitutes a major advantage, if not a necessity.

Moreover, machine tools are required to be as versatile as possible so that a full process cycle can be performed on a workpiece using a single machine and without having to transfer the workpiece from one machine to another to perform different operations.

Machine tools known up to now are not always able to offer the versatility required and to meet the operating needs of manufacturers.

For example, the automatic, revolving type tool changers known in prior art have several disadvantages. These include their structural complexity and the weight and bulkiness of the mechanisms that have to be moved each time the spindle is moved.

Another disadvantage is the fact that few tools are available for machining, which limits the maximum number of machine operations that can be performed. The basic purpose of this invention is to provide a transfer type machine tool that offers a high degree of flexibility or versatility and that is, at the same time, capable of performing full, and even complex, process cycles on a workpiece at a lower cost and in a more limited space than the plurality of prior art machines.

Accordingly, the invention provides a machine tool of the transfer type which comprises the characteristics defined in any of the appended claims.

The technical characteristics of the invention according to the aforementioned aim may be easily inferred from the contents of the appended claims, especially claim 1, and preferably any of the claims that depend, either directly or indirectly, on claim 1.

The advantages of the invention will become more apparent from the following detailed description provided by way of example with reference to the accompanying drawings which illustrate preferred, non-restricting embodiments of the invention and in which:
- Figure 1 is a schematic top plan view of a preferred embodiment of the transfer type machine tool according to the invention;
- Figure 2 is a schematic side elevation view, with some parts cut away for clarity, of the machine tool of Figure 1;
- Figure 3 is a schematic side elevation view, with some parts cut away for clarity, of another embodiment of the machine illustrated in the drawings listed above;
- Figure 4 is a schematic front view of a detail of the machine illustrated in the drawings listed above;
- Figure 5 is a schematic front view of another embodiment of the detail of Figure 4.

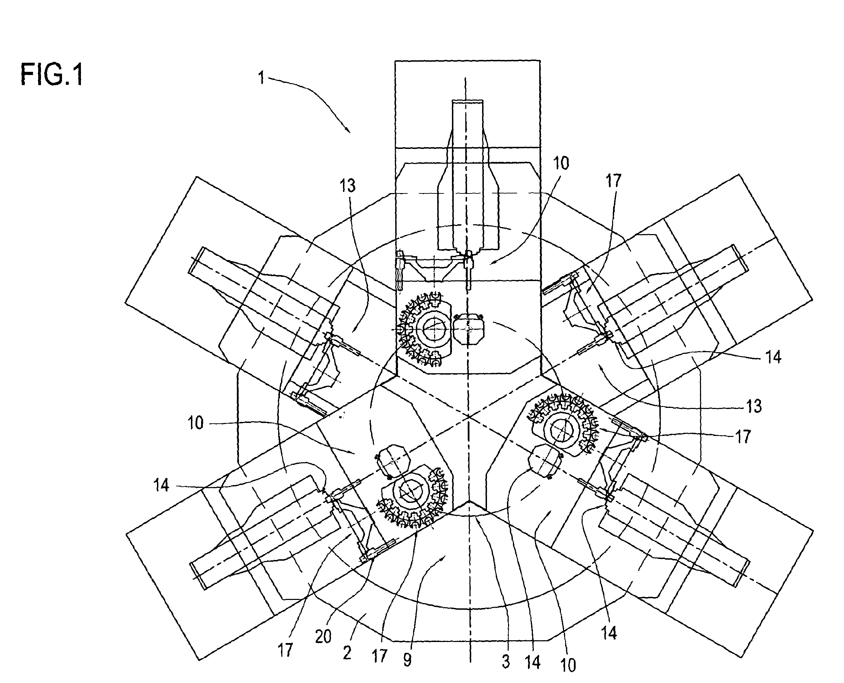

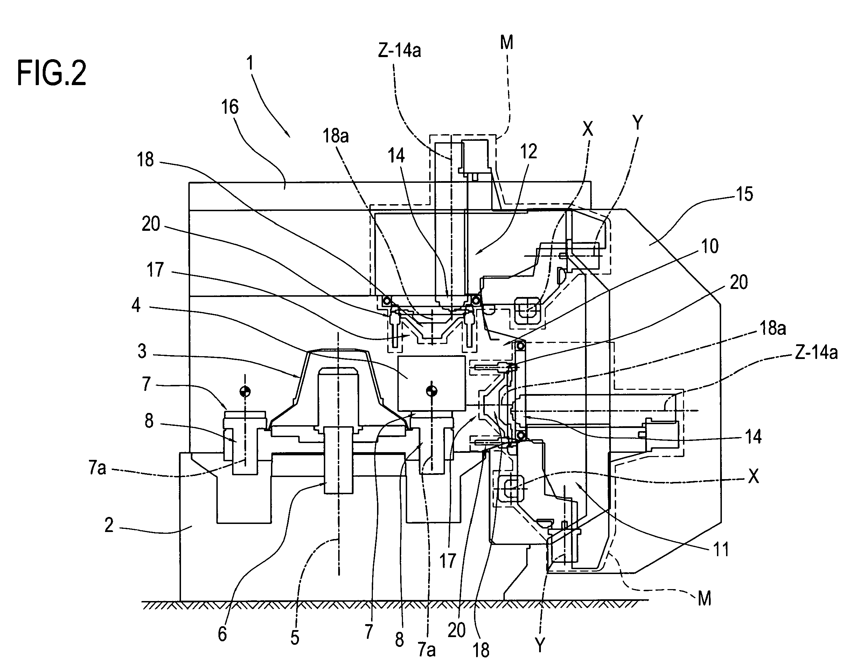

With reference to Figures 1 and 2, the numeral 1 denotes in its entirety a machine tool of the transfer type made according to this invention.

The machine 1 comprises a bed 2 that mounts a rotary table 3 designed to support the workpieces 4.

The rotary table 3 is rotationally driven about a substantially vertical axis of rotation 5 by a motor 6 of known type, illustrated schematically in the accompanying drawings. The table 3 extends axial-symmetrically and mounts a plurality of workpiece 4 gripping and clamping elements distributed at equal angular intervals around its periphery.

The gripping and clamping elements, of known type and not illustrated, are housed on respective satellite tables 7 which are rotationally driven about respective first vertical axes 7a parallel to the rotation axis 5 of the rotary table 3 by suitable motors 8 housed at the edge of the rotary table 3 itself.

The workpiece holding satellite tables 7 are angularly distributed around the periphery of the rotary table 3.

Both the rotary table 3 and the workpiece holding satellite tables 7 are designed to rotate about their respective axes 5 and 7a through angles greater than 360°. In other words, the tables 3, 7 are of the multi turn type, that is to say, tables whose electrical connections are advantageously embodied by rotary collectors.

Hence, each of the tables 3 and 7 can, theoretically, turn an infinite number of times about its respective axis 5, 7a in the same rotation direction.

In the non-limiting embodiment illustrated in Figure 1, the machine 1 comprises a station 9 for loading/unloading the workpieces 4 and five work stations.

In the machine 1 illustrated in Figure 1, there are, purely by way of example, three work stations 10 equipped with a horizontal machining unit 11 as well as a vertical machining unit 12 and two work stations 13 equipped only with a horizontal machining unit 11.

As illustrated in Figure 1, in order to reduce the overall dimensions of the machine 1, the stations 10 that have two machining units 11, 12 are alternated with the stations 13 that have only one horizontal machining unit 11.

The term horizontal machining unit 11 means a unit comprising a tool spindle 14 whose axis of rotation 14a normally remains horizontal and parallel with the floor, irrespective of the linear movements of the tool spindle 14 in space along the three conventional orthogonal axes X, Y, Z.

Similarly, vertical machining unit 12 means a unit comprising a tool spindle 14 whose axis of rotation 14a normally remains perpendicular to the floor.

Irrespective of the horizontal or vertical position of the tool spindle 14, its axis of rotation 14a coincides with the Z-axis of the reference system defined by the three orthogonal axes X, Y, Z along which the tool spindle 14 itself moves in space.

The machine 1 comprises a frame for mounting the machining units 11, 12. The frame consists essentially of a plurality of uprights 15 and a cover 16.

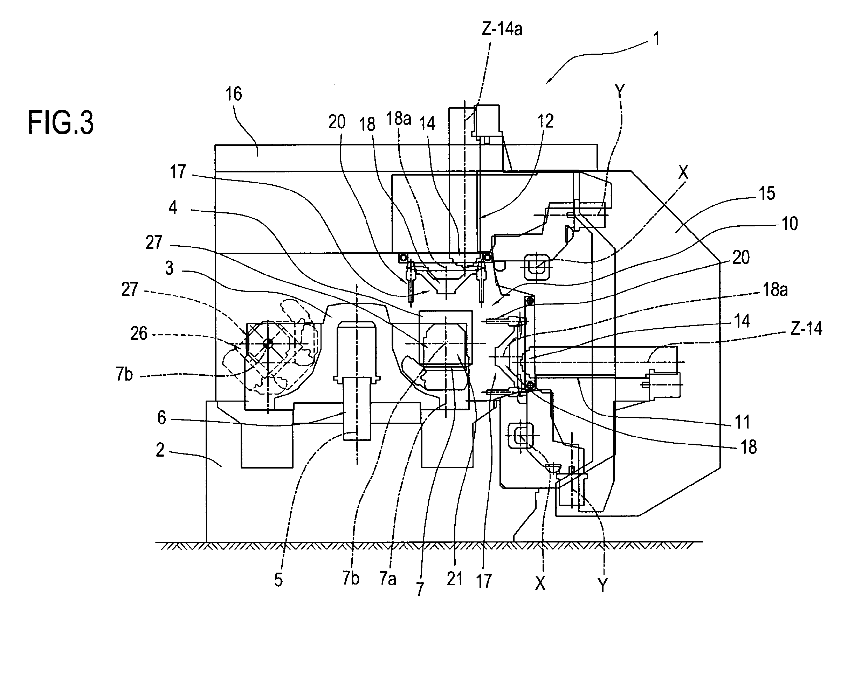

As illustrated in Figures 2 and 3, the work station 10 comprises a horizontal machining unit 11 and a vertical machining unit 12.

The machine 1 also comprises, for each machining unit 11, 12, whether horizontal or vertical, a respective automatic tool changing device 17.

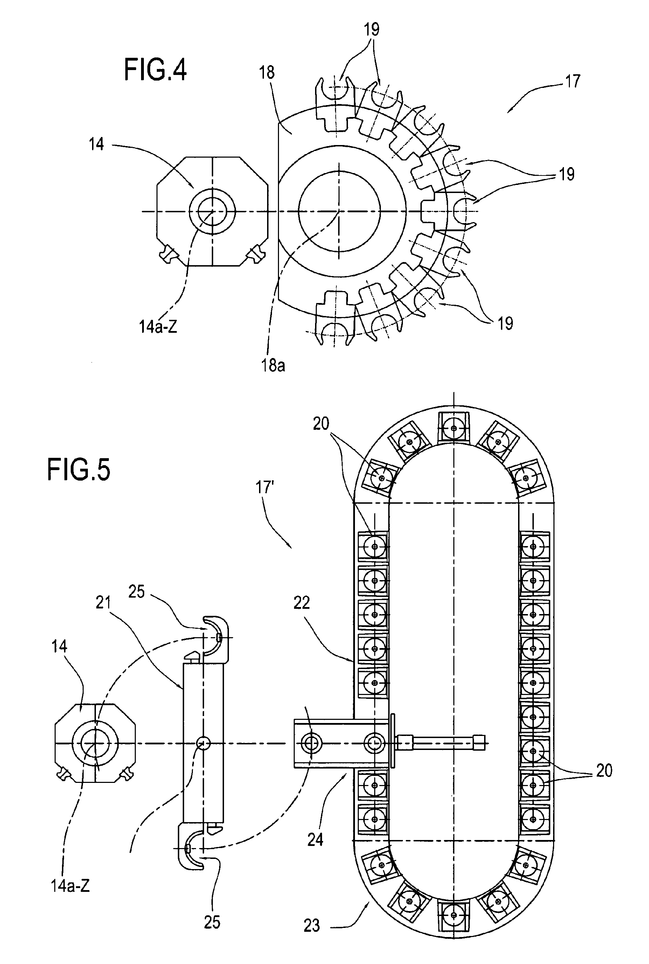

As also illustrated in detail in Figure 4, the automatic tool changing device 17 comprises a rotary radial element 18 having a plurality of housings 19 for tools 20 distributed around its periphery and visible in Figure 2.

The radial element 18 turns about a respective axis 18a parallel to the rotation axis 14a of the tool spindle 14 so as to position on the spindle 14 itself a selected tool 20 located in a respective housing 19.

The plurality of housings 19 constitutes, for the automatic device 17, a tool storage magazine and each housing 19 also constitutes a respective element for gripping a tool 20.

Figure 5 shows an automatic tool changing device 17' alternative to the device 17 just described. The automatic device 17' comprises an arm 21 that turns about a respective axis 21a parallel to the rotation axis 14a of the tool spindle 14 and a separate magazine 22 designed to house a plurality of tools 20. The magazine 22 can transport the plurality of tools 20 along an annular path 23 to move them close to a pick-up station 24. At its opposite longitudinal ends, the arm 21 comprises two elements 25 for gripping the tools 20.

At the pick-up station 24, in a substantially known manner, not illustrated, the arm 21 grips a tool 20 with one of the gripping elements 25 and then rotates through 180° about its axis 21a to transfer it to the tool spindle 14.

With reference to Figures 1 to 4, in the example automatic tool changing device 17 described above, the tool 20 storage magazine and the gripping element are built as one into the rotary radial element 18 equipped with housings 19.

In the alternative embodiment illustrated in Figure 3, the machine according to the invention comprises respective swinging elements 26 for mounting the satellite tables 7.

The swinging elements 26 are mounted on the rotary table 3 and are designed to swing about respective second axes 7b perpendicular to the first rotation axes 7a.

The swinging elements 26 comprise a main U-shaped body 27 which is pivoted, at the top ends of the U, on two respective uprights, not illustrated, attached to the rotary table 3, in such a way as to swing about a respective second axis 7b, perpendicular to the plane of Figure 3.

The transfer machine 1, both in the embodiment illustrated in Figure 2 and in that illustrated in Figure 3, comprises a computerized control unit, not illustrated, for controlling the movements of the rotary table 3, of the horizontal and vertical units 11, 12, of the tool 20 changing devices 17, and the performance of all the steps of machining the workpieces 4.

The computerized control unit is also designed to check the position and speed of each satellite table 7 relative to the instantaneous position of the working tool spindle 14 mobile along the three orthogonal axes X, Y, Z.

In other words, the tool spindle 14 is fed forward in interpolated mode taking into account the rotation or rotations of the satellite table 7 about the respective axis or axes 7a, 7b. The feed motion of the tool spindle 14 is a movement derived from the combination of the three linear movements along the three orthogonal axes X, Y, Z.

As illustrated in Figures 2 and 3, the machining units 11 and 12 of the transfer machine 1 are made on a modular basis and each machining unit is based on a modular working element M.

For example, the dashed line in Figure 2 schematically identifies the two modular elements M that are assembled to form the station 10.

Obviously, each station 13 has only one modular element M, not illustrated, forming the respective horizontal machining unit 11.

Looking in more detail, each modular element M comprises a tool spindle 14, a structure for mounting the tool spindle 14 and moving it along the three orthogonal axes X, Y, Z and a respective automatic tool changing device 17.

During use of the machine 1, the workpieces 4 are loaded onto the satellite tables 7 at the loading/unloading station 9, and by turning the rotary table 3 in steps about its axis 5, the workpieces 4 are positioned for machining one after the other at the successive work stations 10, 13.

At the stations 10, that is to say, those with both a horizontal machining unit 11 and a vertical machining unit 12, the workpiece 4 is designed to be machined by tools mounted on respective spindles 14, one having an axis 14a positioned horizontally and the other an axis 14a positioned vertically.

When the tool 20 on a spindle 14 has to be changed because the workpiece 4 requires a different machining operation, the following procedure is performed:
- the rotary element 18 is turned about its axis 18a until an empty housing 19 is positioned in front of the spindle 14;
- the housing 19 and the spindle 14 are moved towards each other in a direction parallel to the 14a of the spindle 14 itself;
- the housing 19 grips the tool 20 mounted on the spindle 14;
- the rotary element 18 and the spindle 14 are moved away from each other along the above mentioned direction parallel to the axis 14a;
- the rotary element 18 is turned until another tool 20 to be mounted on the empty spindle 14 is positioned in front of the spindle 14 itself;
- the rotary element 18 and the spindle 14 are moved towards each other in a direction parallel to the axis 14a;
- the new tool 20 is transferred from the respective housing 19 to the spindle 14 and the tool 20 is fixed to the spindle 14;
- the rotary element is turned and moved away so as to clear the working area of the spindle 14 to allow the latter to move freely along the three orthogonal axes X, Y, Z and to machine the workpiece 4.

The procedure described is an example of how the tool on any of the spindles 14 of the machine 1 can be changed using an automatic device 17 of the type illustrated in Figures 1 to 4, that is, where the tool 20 storage magazine and the gripping element are built as one into the rotary element 18.

The procedure for changing the tool on one of the spindles 14 of the machine 1 using an automatic device 17' of the type with a rotary arm 21 differs in some of its steps from the procedure described above performed by the device 17. The different steps are due basically to the fact that the arm 21 does not normally house any tool but must pick one up from the magazine 22 which is separate from it.

The automatic tool changing device 17' is not described in detail here since it is of substantially known type.

Advantageously, the arrangement described above, with the tool changing devices 17, 17' positioned next to the spindles 14, makes it possible to considerably reduce the overall dimensions of each machining unit 11, 12. Thus, two modular elements M can be combined to form work stations 10 equipped with both a horizontal 1 machining unit 11 and a vertical machining unit 12.

Another advantage of the modular structure of the machine 1 is that different machine configurations can be created to meet specific customer requirements, even, if necessary, by adding one or more modular elements M after the machine has been delivered, thus easily modifying the initial design configuration.

This possibility advantageously makes the machine 1 according to the invention particularly versatile.

## Claims

1. A machine tool of the transfer type comprising:
- a bed (2);
- a rotary table (3) which turns about a vertical axis (5) and which supports the workpieces (4);
- at least one station (9) for loading and/or unloading the workpieces (4);
- a plurality of work stations (10, 13), at least one of which (10) comprises a vertical machining unit (12) and a horizontal machining unit (11), the machine being **characterised in that** it comprises, for each horizontal and vertical machining unit (11, 12) of the work station (10), a respective automatic tool changing device (17; 17'), said device (17; 17') comprising a magazine (19; 22) for storing a plurality of tools (20) and at least one gripping element (19; 25) designed to transfer the tools 20) to and from a respective machining unit (11, 12).

2. The machine according to claim 1, **characterised in that** the plurality of work stations (10, 13) is comprised of one or more stations (10) equipped with a vertical machining unit (12) and a horizontal machining unit (11) alternated with one or more stations (13) equipped only with a horizontal machining unit (11).

3. The machine according to claim 1 or 2, **characterised in that** each machining unit (11, 12) comprises a revolving tool spindle (14) that is operatively mobile along three orthogonal axes (X, Y, Z), said tool spindle (14) being separate from the automatic tool changing device (17; 17').

4. The machine according to claim 3, **characterised in that** the gripping element (19; 25) for transferring the tools (20) to and from the spindle (14) of a machining unit turns about a respective axis (18a; 21a) parallel to the rotation axis (14a) of the spindle (14).

5. The machine according to claim 4, **characterised in that** the automatic tool changing device (17) gripping element and a magazine built as one.

6. The machine according to claim 5, **characterised in that** the automatic tool changing device (17) comprises a rotary element (18) equipped with a plurality of tool (20) housings (19) distributed around its periphery.

7. The machine according to claim 5, **characterised in that** the automatic tool changing device (17') comprises a rotary arm (21) equipped, at its opposite longitudinal ends, with two respective tool (20) gripping elements (25).

8. The machine according to any of the foregoing claims from 1 to 7, **characterised in that** the rotary table (3) comprises a plurality of workpiece holding satellite tables (7), said satellite tables (7) being distributed around the periphery of the rotary table (3) and being themselves designed to rotate about respective first axes (7a) parallel to the rotation axis (5) of the rotary table (3).

9. The machine according to any of the foregoing claims from 1 to 8, **characterised in that** the rotary table (3) is designed to rotate through angles greater than 360°.

10. The machine according to any of the foregoing claims from 1 to 9, **characterised in that** the workpiece holding satellite tables (7) are designed to rotate through angles greater than 360°.

11. The machine according to any of the foregoing claims from 1 to 10, **characterised in that** the workpiece holding satellite tables (7), are designed to swing about respective second axes (7b) perpendicular to the first rotation axes (7a).

12. The machine according to any of the foregoing claims from 1 to 10, **characterised in that** it comprises a computerized control unit designed to control the rotation of each satellite table (7) about the respective first axis (7a) relative to the instantaneous position of the tool spindle (14) along the three orthogonal axes (X, Y, Z).

13. The machine according to claim 11, **characterised in that** it comprises a computerized control unit designed to control the rotation of each satellite table (7) about the respective first and second axes (7a, 7b) relative to the instantaneous position of the tool spindle (14) along the three orthogonal axes (X, Y, Z).

14. A modular element for a machine tool of the transfer type according to any of the foregoing claims from 1 to 13, **characterised in that** it comprises:
- a structure for mounting and moving at least one tool spindle (14); and
- an automatic tool changing device (17) comprising a magazine for storing a plurality of tools (20) and a gripping element for transferring the tools (20) to and from the spindle (14).
